# FASCICULE DE BREVET EUROPEEN

(11) **EP 0 557 221 B1**
(45) Date de publication et mention de la délivrance du brevet: **13.05.1998**
(21) Numéro de dépôt: 93420076.7
(22) Date de dépôt: 17.02.1993
(51) Int. Cl.: A47J 37/08, A47J 37/04

(54) **Grille-pain à plan de défilement incliné**
Brotröster mit geneigter Transportebene
Toaster with inclined conveying plane

(30) Priorité: 18.02.1992 FR 9202069
(43) Date de publication de la demande: 25.08.1993
(73) Titulaire: SEB S.A., 69130 Ecully (FR)
(72) Inventeur: Klinger, Michel Albert, F-68140 Stosswihr (FR); Gavoille, Eric André, F-70310 La Rosière (FR); Eisenberg, Roger, F-57157 Marly (FR); Balandier, Jean-Marie, F-88400 Gerardmer (FR)

(56) Documents cités:
- CH-A- 472 874
- DE-U- 8 802 102
- FR-A- 1 555 303
- FR-A- 2 320 696
- US-A- 3 695 170

## Description

La présente invention se rapporte au domaine technique général des appareils automatiques à griller, plus particulièrement destinés à assurer le grillage de produits panifiés tels que des tranches de pain ou des produits analogues du genre croissants ou viennoiseries.

L'invention concerne un appareil à griller à défilement, du type grille pain, dans lequel les articles à griller sont amenés à défiler à l'intérieur d'un canal de grillage entre des éléments chauffants afin d'être grillés de manière simultanée sur leur deux faces.

Les appareils à griller à défilement sont déjà bien connus dans l'art antérieur et présentent en comparaison avec les appareils à griller dans lesquels les tranches de pains sont grillés à poste fixe, la particularité de répartir régulièrement la fourniture des articles grillés pour un même intervalle de temps. Dans les appareils à griller à poste fixe, les articles grillés sont fournis à l'utilisateur en une seule fois après un temps d'attente considéré généralement comme long, du moins en comparaison avec les appareils à griller à défilement. Dans le domaine général des grillage un exemple d'appareil à griller est décrit dans le brevet US-A-3695170. L'appareil à griller comporte des éléments chauffants et une chaine de défilement. Cette dernière est assortie d'un maillage complexe et espacé de manière à permettre son pivotement lors du passage entre les éléments chauffants. Les articles destinés au grillage défilent ainsi de façon inclinée entre lesdits éléments chauffants. L'application visée par ce type d'appareils est le grillage de viandes de type industriel. Un certain nombre d'invonvénients sont ainsi liés à ce type d'appareils, notamment leur compléxité et leurs dimensions. De tels appareils ne sont pas adaptés à un usage domestique. Un autre exemple d'appareil à griller à défilement est notamment illustré dans le brevet GB-A-980 618. Le grille pain décrit dans ce brevet comporte une série de canaux de grillage parallèles entre eux dont le fond constitue les moyens de défilement des tranches de pain à griller insérées dans lesdits canaux. Les moyens de chauffe destinés à assurer le grillage proprement dit sont disposés de part et d'autre des canaux et le grille pain est pourvu, dans chaque canal, de cadres de soutien destinés à enserrer les tranches de pain à griller de manière à les maintenir en position verticale à l'intérieur de chaque canal pendant leur défilement. Une telle conception peut être considérée comme classique dans le cas de grille pain à défilement. De tels dispositifs donnent généralement satisfaction à l'utilisateur, mais souffrent néanmoins d'un certain nombre de désavantages liés à la conception même des appareils à défilement. Ainsi il s'avère que le maintien en position verticale des tranches de pain à griller au dessus du moyen assurant le défilement des tranches de pain, a pour conséquence soit d'entrainer le dépôt de miettes directement sur le système d'entrainement à défilement, soit le passage des miettes à travers le système et leur dépôt au fond de l'appareil. Dans les deux cas le dépôt de ces miettes constitue un élément considéré de manière négative par l'utilisateur. Ce dernier doit en effet s'il veut résoudre au moins partiellement ce problème, s'astreindre après chaque utilisation à retourner l'appareil pour évacuer au moins partiellement les miettes. Le dépôt de miettes a également une incidence non négligeable sur le maintien en condition d'asepsie du grille pain, et peut dans certains cas extrêmes conduire à diminuer la durée de vie de l'appareil, ou être à l'origine d'incidents. Le grille pain, du type à défilement mentionné ci-dessus, souffre également d'un inconvénient majeur lié à la position verticale des tranches à griller, dans la mesure où il est nécessaire d'avoir recours à des moyens de maintien en position verticale de l'article à griller. Ces moyens de maintien s'accommodent de manière limitative des diverses épaisseurs possibles des tranches de pain. Dans le cas du brevet GB-A-980 618, les grilles de maintien sont pourvues de branches possédant une certaine flexibilité et pouvant en conséquence s'adapter à différentes épaisseurs d'articles à griller. Une telle flexibilité s'avère cependant généralement insuffisante et n'est pas à même d'accepter de grandes variations d'épaisseur. Différents systèmes ont été proposés pour tenter d'augmenter sur les types d'appareils à défilement, les possibilités de réglages en largeur des moyens de soutien verticaux, et les solutions techniques envisagées, se sont toutes avérées complexes et difficilement réalisables compte tenu notamment du peu d'espace disponible.

L'objet de la présente invention vise en conséquence à remédier aux problèmes mentionnés précédemment, et à fournir un appareil à griller à défilement, du type grille pain, capable d'assurer de manière simple et fiable le grillage d'articles quelle que soit l'épaisseur de ces derniers, tout en évitant le dépôt de miettes dans la partie inférieure de l'appareil.

Un autre but de l'invention vise à fournir un appareil à griller à défilement capable d'assurer un défilement sur des articles à griller quel que soit leur profil de coupe et leur position relative dans le canal de grillage.

Les buts assignés à l'invention sont atteints à l'aide d'un appareil à griller à défilement du type grille pain, comportant, agencés sur un bâti :
- un canal de grillage définissant un fond à partir duquel s'élève au moins une paroi
- des moyens d'entrainement en défilement des articles à griller d'une extrémité à l'autre du canal, lesdits moyens formant le fond du canal
- des moyens de chauffe disposés de part et d'autre du canal pour assurer le grillage
- des moyens de soutien des articles à griller incorporés dans le canal et s'étendant sensiblement selon le même axe pour soutenir les articles à griller pendant leur défilement
caractérisé en ce que les moyens de soutien forment une paroi du canal et définissent une surface de soutien inclinée contre laquelle repose une face des articles à griller lors du défilement, ledit plan étant incliné à partir du fond vers l'extérieur du canal.

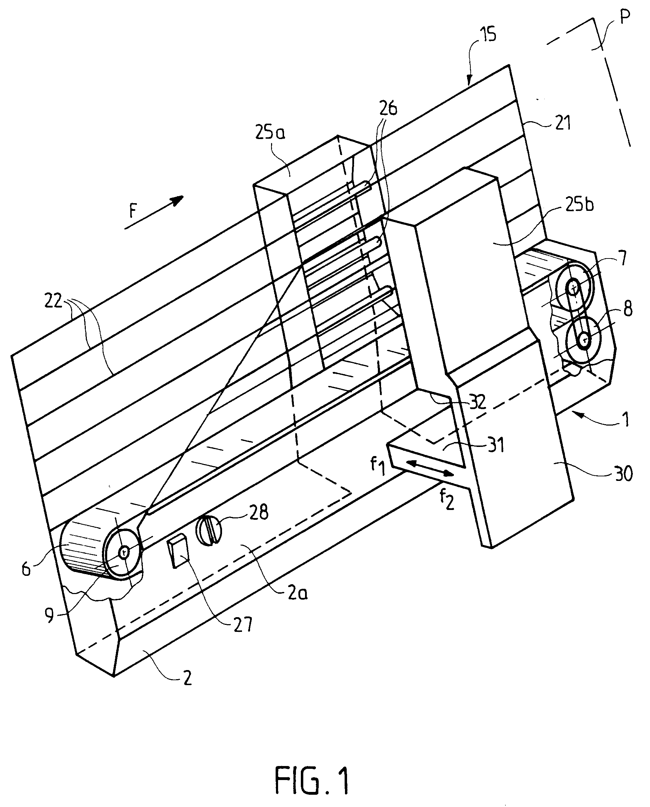

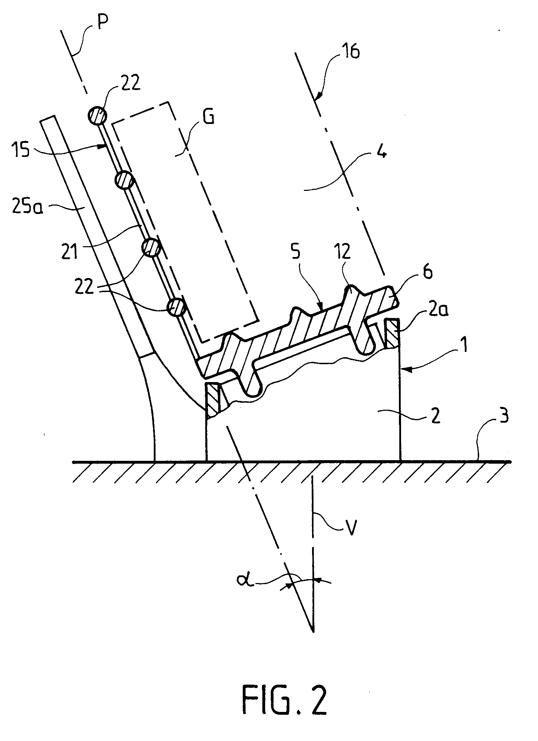

Les caractéristiques et avantages de l'invention ressortiront mieux à la lecture de la description donnée ci-après à titre d'exemple non limitatif, en référence aux dessins annexés dans lesquels :
- La figure 1 montre selon une vue en perspective un appareil à griller conforme à l'invention.
- La figure 2 montre selon une vue en coupe transversale un appareil à griller à défilement conforme à l'invention.
Le grille pain conforme à l'invention et montré aux figures 1 et 2 comporte un bâti 1 s'étendant selon un plan longitudinal et incluant une embase 2, pourvue de parois latérales 2a, et destinée à reposer sur un support quelconque plan 3. Le grille pain comporte un canal de grillage 4, de section transversale assimilable à un U, et s'étendant sensiblement sur la totalité de la longueur du bâti 1 pour définir une extrémité d'entrée et une extrémité de sortie. Le canal de grillage 4 définit un fond 5 destiné à supporter la partie inférieure des articles à griller G cheminant dans le canal de grillage 4, et constituant les moyens d'entrainement à défilement desdits articles d'une extrémité à l'autre dudit canal. Dans le cas présent, les moyens d'entrainement en défilement, sont constitués, de manière avantageuse, par une bande transporteuse 6, de largeur constante réalisée dans un matériau de tout type présentant une bonne résistance à la chaleur. De manière préférentielle la bande transporteuse 6 est réalisée à partir d'un matériau du type alimentaire tel que du silicone naturel. La bande transporteuse 6 est entrainée en défilement de manière connue en soi par un galet moteur 7 en relation d'entrainement avec un moteur d'entrainement 8. L'extrémité opposée de la bande transporteuse 6 est supportée par un galet libre 9. L'ensemble du système d'entrainement est incorporé dans le volume creux défini à l'intérieur de l'embase 2 de manière que la bande transporteuse 6 affleure au dessus de l'embase 2 et au dessus des parois latérales 2a.

Le matériau constitutif du moyen d'entrainement en défilement est également choisi de manière à posséder de bonnes propriétés d'adhésion afin d'éviter le glissement de l'article à griller G. A cet effet il est avantageux de prévoir de réaliser sur la surface externe de la bande transporteuse 6 une série de moyens antidérapants tels que des nervures 12 ou des encoches (non représentées aux figures) s'étendant longitudinalement et/ou transversalement et préférentiellement, de manière continue le long de la bande porteuse 6 suivant son axe principal longitudinal.

Le canal de grillage 4 est délimité latéralement par au moins une et de préférence deux parois latérales 15, 16, de préférence parallèles entre elles, s'élevant à partir du fond 5. La paroi 15 constitue un moyen de soutien pour les articles à griller G dont l'une des faces à griller est destinée à reposer contre ladite paroi 15 alors que la tranche de l'article G repose sur la bande transporteuse 5a. La paroi 15 forme une surface de soutien fixe qui s'étend de préférence dans un plan d'extension bornant le canal de grillage 4 et définissant un plan de soutien P qui forme avec le plan vertical V un angle α (figure 2). Le plan P est incliné à partir du fond 5 vers l'extérieur du canal de grillage 4 et l'angle α doit être choisi de manière a assurer un soutien stable de l'article à griller lorsque celui-ci repose par sa tranche sur la paroi transporteuse 6 et s'appuie sur la paroi 15 sans s'opposer au glissement relatif de l'article à griller G par rapport à la paroi 15, lors du défilement de la bande transporteuse 6. Pour répondre à ces contraintes, l'angle α doit être compris entre 5 et 40° et être avantageusement voisin de 15°.

La paroi 15 peut être réalisée de diverses manières et être constituée d'une paroi pleine solidaire du bâti 1 et prolongeant par exemple directement l'embase 2. De manière avantageuse, comme cela est montré aux figures 1 et 2, la paroi 15 peut être formée par une grille fixe 21 solidaire du bâti 1 et constituée d'une série de barreaux 22, de préférence métalliques, s'étendant longitudinalement.

Selon un agencement particulièrement avantageux de l'invention, la bande transporteuse 6 et la paroi 15 sont disposées relativement de manière que leurs plans d'extension respectifs forment entre eux un dièdre droit, la bande transporteuse 6 s'étendant en conséquence dans un plan orthogonal au plan P. Cette disposition assure une meilleure stabilité des articles à griller G et permet un dépôt des miettes dans une zone de récupération localisée précisémment à la jonction des deux plans ce qui évite une dissémination aléatoire des miettes sur ou dans le grille pain. Cet agencement permet également, lorsque la bande transporteuse 6 est disposée relativement à la paroi 15 au moins en position d'affleurement, d'assurer l'évacuation des miettes directement à l'extérieur du grille pain. Il est bien évident que d'autres dispositions relatives de la bande transporteuse 6 et de la paroi 15 sont envisageables sans pour autant sortir du cadre de l'invention.

Le grille pain conforme à l'invention comporte également comme cela est bien connu dans l'art antérieur, des moyens de chauffe comportant deux réflecteurs infrarouges 25a, 25b disposés en regard l'un de l'autre de chaque coté du canal de grillage 4, et de préférence à distance des parois 15 et 16. Chaque réflecteur 25a, 25b forme une enceinte de chauffe qui peut comporter une série de barreaux chauffants 26 s'étendant à l'intérieur de l' enceinte dans des plans successifs décalés par rapport au barreaux 22. Les réflecteurs 25a, 25b s'étendent sur une fraction de la longueur hors tout de la bande transporteuse 6 et sont disposés à proximité de la partie terminale du canal de grillage 5 en considérant le sens d'avancement F de la bande transporteuse 6.

Avantageusement, l'un au moins des réflecteurs 25b est monté mobile sur le bâti 1 relativement au canal de grillage 4 en éloignement et rapprochement. A cette fin, le réflecteur 25b est supporté par une jambe de soutien 30 pourvue d'une patte de montage 31, s'étendant sensiblement perpendiculairement au plan de la jambe de soutien 30, et montée par exemple à coulissement, selon le sens des flèches f1, f2, dans l'embase 2. Il est ainsi possible de modifier la distance séparant l'article à griller G du réflecteur 25b, et de maintenir suivant l'épaisseur de l'article G, une distance identique entre chaque face de grillage et chaque réflecteur 25a, 25b associé. La mobilité relative du ou des réflecteurs 25a, 25b fournit également un autre moyen simple pour réguler par éloignement ou rapprochement des sources infrarouges, le flux thermique de grillage, et donc l'intensité du grillage en lui-même. Selon une variante préférentielle le réflecteur 25b est conformé et monté mobile avec une course suffisante pour que l'extrémité inférieure 32 de l'enceinte de chauffe puisse venir au dessus du fond 5 et de la bande transporteuse 6 en position de surplomb partiel ou total. A cette fin, l'enceinte de chauffe est dimensionnée en conséquence pour que l'extrémité inférieure 32 s'étende à un niveau légèrement supérieur à la bande transporteuse 6, de manière à permettre un grillage de l'article G aussi bas que possible et de préférence dès le plan de jonction entre la bande 6 et l'article à griller G.

L'appareil à griller conforme à l'invention comporte également de manière connue un interrupteur 27 de mise en marche ou d'arrêt de l'appareil ainsi qu'un organe de commande 28 tel qu'un bouton, relié à un moyen de régulation de la vitesse de défilement de la bande transporteuse 6, tel qu'un potentiomètre.

Le fonctionnement de l'appareil à griller conforme à l'invention est le suivant.

L'utilisateur dispose l'article à griller G dans le canal de grillage 4 à son extrémité d'entrée, l'article G étant soutenu dans sa position inclinée par appui contre un ou plusieurs barreaux 22, et reposant par sa tranche inférieure contre la bande transporteuse 6. Le défilement continu de la bande transporteuse 6 assure la progression de l'article à griller G en direction des réflecteurs 25a et 25b selon le sens illustré par la flèche F. L'utilisateur peut ainsi dès que l'appareil est en marche ou même avant, disposer, une pluralité d'articles à griller les uns à la suite des autres dans le canal de grillage 4. Suivant l'épaisseur des articles à griller G, et suivant le degré de grillage ou brunissage souhaité, l'utilisateur peut, par actionnement de l'organe de réglage 28, modifier la vitesse de défilement de la bande transporteuse 6 conditionnant le temps de passage de l'article G entre les réflecteurs 25a, 25b.

Le recours à des moyens de soutien formant un plan incliné contre lequel reposent par une face et glissent les articles à griller, permet en conséquence, d'une part d'évacuer directement à l'extérieur de l'appareil au moins une partie des miettes, et d'autre part de disposer de moyens particulièrement simples pour soutenir les articles à griller. Il convient également de noter que l'agencement choisi, ne nécessite aucun dispositif particulier ou supplémentaire pour tenir compte des diverses épaisseurs possibles des articles à griller, la seule limite étant que l'article G soit supporté par la bande 6 sur une surface suffisante pour assurer à la fois son support et son entrainement. Il en résulte en conséquence une simplification importante de la conception et de la fabrication de tels appareils à usage domestique.

## Revendications

1. Appareil à griller à défilement du type grille pain, comportant agencés sur un bâti (1) :
- un canal de grillage (4) définissant un fond (5) à partir duquel s'élève au moins une paroi (15, 16)
- des moyens d'entrainement en défilement des articles à griller (G) d'une extrémité à l'autre du canal, lesdits moyens formant le fond (5) du canal (4)
- des moyens de chauffe (25a, 25b) disposés de part et d'autre du canal (4) pour assurer le grillage
- des moyens de soutien des articles à griller incorporés dans le canal (4) et s'étendant sensiblement selon le même axe pour soutenir les articles à griller (G) pendant leur défilement caractérisé en ce que les moyens de soutien forment une paroi (15) du canal (4) et définissent une surface de soutien inclinée contre laquelle repose une face des articles à griller (G) lors du défilement, ladite surface (P) étant inclinée à partir du fond (5) vers l'extérieur du canal (4).

2. Appareil selon la revendication 1 caractérisé en ce que la surface de soutien forme un plan (P) incliné d'un angle α compris entre 5 et 40 degrés par rapport à la verticale et de préférence voisin de 15°.

3. Appareil selon les revendications 1 ou 2 caractérisé en ce que la surface de soutien est formée par une grille (21) solidaire du bâti (1).

4. Appareil selon les revendications 1 ou 2 caractérisé en ce que la surface de soutien est formée par une paroi pleine s'élevant à partir du bâti.

5. Appareil selon l'une des revendications précédentes caractérisé en ce que les moyens d'entrainement sont constitués par une bande transporteuse (6), de préférence en silicone naturel.

6. Appareil selon la revendication 5 caractérisé en ce que la bande transporteuse (6), s'étend dans un plan orthogonal au plan de soutien (P).

7. Appareil selon les revendications 5 ou 6 caractérisé en ce que la bande transporteuse (6) est pourvue de nervures (12) ou d'encoches s'étendant transversalement et/ou longitudinalement.

8. Appareil selon l'une des revendications précédentes caractérisé en ce que les moyens de chauffe comportent deux réflecteurs (25a, 25b) infrarouge en regard l'un de l'autre de chaque côté du canal de grillage (4).

9. Appareil selon la revendication 5 caractérisé en ce que la vitesse de défilement de la bande transporteuse (6) est réglable.

10. Appareil selon l'une des revendications 1 à 9 caractérisé en ce que les moyens de chauffe comportent deux réflecteurs infrarouges (25a, 25b) disposés en regard l'un de l'autre de chaque côté du canal (4) l'un au moins étant un réflecteur (25b) monté mobile relativement au canal de grillage (4) en éloignement et en rapprochement.

11. Appareil selon la revendication 10, caractérisé en ce que le ou les réflecteurs (25a, 25b) sont montés mobiles avec une course suffisante pour leur permettre de venir en position de surplomb total ou partiel du fond (5).

## Claims

1. A travel-through toasting appliance of the toaster type comprising the following disposed on a frame (1):
a toaster channel (4) defining a bottom (5) from which at least one wall (15, 16) extends upwards;
drive means for driving items to be toasted (G) so that they travel from one end of the channel to the other, said means forming the bottom (5) of the channel (4);
heater means (25a, 25b) disposed on either side of the channel (4) for performing toasting; and
support means for supporting items to be toasted, which means are incorporated in the channel (4) and they extend substantially along the same axis to support the items to be toasted (G) while said items are travelling through the channel;
said appliance being characterized in that the support means form a wall (15) of the channel (4) and they define a sloping support surface against which one face of each of the items to be toasted (G) rests while the item is travelling, said surface (P) sloping towards the outside of the channel (4) from the bottom (5).

2. An appliance according to claim 1, characterized in that the support surface forms a plane (P) that slopes relative to the vertical at an angle α lying in the range 5 degrees to 40 degrees, and preferably lying in the vicinity of 15 degrees.

3. An appliance according to claim 1 or 2, characterized in that the support surface is formed by a grid (21) secured to the frame (1).

4. An appliance according to claim 1 or 2, characterized in that the support surface is formed by an uninterrupted wall extending upwards from the frame.

5. An appliance according to any preceding claim, characterized in that the drive means are constituted by a conveyor belt (6) preferably made of natural silicone.

6. An appliance according to claim 5, characterized in that the conveyor belt (6) extends in a plane that is orthogonal to the support plane (P).

7. An appliance according to claim 5 or 6, characterized in that the conveyor belt (6) is provided with ribs (12) or notches extending transversely and/or longitudinally.

8. An appliance according to any preceding claim, characterized in that the heater means include two infrared reflectors (25a, 25b) facing each other on either side of the toaster channel (4).

9. An appliance according to claim 5, characterized in that the speed of travel of the conveyor belt (6) is adjustable.

10. An appliance according to any one of claims 1 to 9, characterized in that the heater means include two infrared reflectors (25a, 25b) disposed facing each other on either side of the channel (4), at least one of them being a reflector (25b) mounted to move towards and away from the toaster channel (4).

11. An appliance according to claim 10, characterized in that the movably mounted reflector(s) (25a, 25b) is/are mounted so that it/each of them can move over a stroke that is long enough to enable it to come into a position in which it partially or totally overlaps the bottom (5).

## Patentansprüche

1. Gerät zum Durchlauf-Rösten des Typs Brotröster, enthaltend an einem Gestell (1) angeordnet:
- einen Röstkanal (4), der einen Boden (5) aufweist, von welchem ausgehend sich wenigstens eine Wand (15, 16) erhebt,
- Mittel zum Antreiben der zu röstenden Nahrungsmittel (G) in einem Durchlauf von einem Ende des Kanals zum anderen, wobei die Mittel den Boden (5) des Kanals (4) bilden,
- Heizmittel (25a, 25b), die auf der einen und auf der anderen Seite des Kanals (4) angeordnet sind, um das Rösten zu gewährleisten,
- Mittel zum Stützen der zu röstenden Nahrungsmittel, die in den Kanal (4) integriert sind und sich im wesentlichen entlang derselben Achse erstrecken, um die zu röstenden Nahrungsmittel (G) während ihres Durchlaufs zu stützen,
dadurch gekennzeichnet, daß die Stützmittel eine Wand (15) des Kanals (4) bilden und eine geneigte Stützfläche definieren, an der eine Seite der zu röstenden Nahrungsmittel (G) während des Durchlaufs anliegt, wobei die Fläche (P) ausgehend vom Boden (5) zum Äußeren des Kanals (4) geneigt ist.

2. Gerät nach Anspruch 1, dadurch gekennzeichnet, daß die Stützfläche eine Ebene (P) bildet, die in einem Winkel α zwischen 5° und 40° und vorzugsweise etwa 15° gegenüber der Vertikalen geneigt ist.

3. Gerät nach einem der Ansprüche 1 und 2, dadurch gekennzeichnet, daß die Stützfläche durch ein fest mit dem Gestell (1) verbundenes Gitter (21) gebildet ist.

4. Gerät nach einem der Ansprüche 1 und 2, dadurch gekennzeichnet, daß die Stützfläche durch eine massive Wand gebildet ist, die sich ausgehend von dem Gestell erhebt.

5. Gerät nach einem der vorhergehenden Ansprüche, dadurch gekennzeichnet, daß die Antriebsmittel durch ein Transportband (6) gebildet sind, vorzugsweise aus natürlichem Silikon.

6. Gerät nach Anspruch 5, dadurch gekennzeichnet, daß sich das Transportband (6) in einer zur Stützebene (P) senkrechten Ebene erstreckt.

7. Gerät nach einem der Ansprüche 5 und 6, dadurch gekennzeichnet, daß das Transportband (6) mit Rippen (12) oder Nuten versehen ist, die sich quer und/oder in Längsrichtung erstrecken.

8. Gerät nach einem der vorhergehenden Ansprüche, dadurch gekennzeichnet, daß die Heizmittel zwei Infrarotreflektoren (25a, 25b) enthalten, die einander gegenüberliegend auf der einen und der anderen Seite des Röstkanals (4) angeordnet sind.

9. Gerät nach Anspruch 5, dadurch gekennzeichnet, daß die Durchlauf-Geschwindigkeit des Transportbandes (6) einstellbar ist.

10. Gerät nach einem der Ansprüche 1 bis 9, dadurch gekennzeichnet, daß die Heizmittel zwei Infrarotreflektoren (25a, 25b) enthalten, die einander gegenüberliegend auf der einen und der anderen Seite des Kanals (4) angeordnet sind, wobei wenigstens einer ein Reflektor (25b) ist, der relativ zum Röstkanal (4) von diesem weg und zu diesem hin bewegbar angebracht ist.

11. Gerät nach Anspruch 10, dadurch gekennzeichnet, daß der Reflektor oder die Reflektoren (25a, 25b) über einen ausreichenden Weg bewegbar angebracht sind, so daß sie in eine Stellung gelangen können, in der sie vollständig oder teilweise über den Boden (5) überstehen.
